# EUROPÄISCHE PATENTSCHRIFT

(11) **EP 1 097 531 B1**
(45) Veröffentlichungstag und Bekanntmachung des Hinweises auf die Patenterteilung: **27.08.2003**
(21) Anmeldenummer: 99939944.7
(22) Anmeldetag: 24.06.1999
(51) Int. Cl.: H04B 10/135, H04B 10/18

(54) **VERFAHREN ZUR POLARISATIONSMODENDISPERSION-KOMPENSATION UND POLARISATIONSMODENDISPERSION-KOMPENSATOR**
METHOD FOR COMPENSATING FOR POLARISATION MODE DISPERSION AND POLARISATION MODE DISPERSION COMPENSATOR
PROCEDE DE COMPENSATION DE DISPERSION EN MODE POLARISATION ET COMPENSATEUR DE DISPERSION EN MODE POLARISATION

(30) Priorität: 10.07.1998 DE 19830990
(43) Veröffentlichungstag der Anmeldung: 09.05.2001
(73) Patentinhaber: SIEMENS AKTIENGESELLSCHAFT, 80333 München (DE)
(72) Erfinder: NOE, Reinhold, D-33100 Paderborn (DE)
(86) Internationale Anmeldenummer: DE9901846
(87) Internationale Veröffentlichungsnummer: WO00003505

(56) Entgegenhaltungen:
- EP-A- 0 716 516
- WO-A-95/34141
- FR-A- 2 758 029
- US-A- 5 473 457

## Beschreibung

Die Erfindung betrifft ein Verfahren zur Polarisationsmodendispersion-Kompensation nach Anspruch 1 und einen Polarisationsmodendispersion-Kompensator nach Anspruch 5.

In der optischen Übertragungstechnik werden möglichst lange Lichtwellenleiter-Übertragungsstrecken verwendet. Die Lichtwellenleiter sind herstellungsbedingt nicht vollständig isotrop. Wegen der langen Übertragungsstrecken ergibt sich durch Doppelbrechung der übertragenen optischen Signale eine frequenzabhängige Polarisationstransformation - Polarisationsmodendispersions oder kurz Polarisationsdispersion PMD genannt. Diese führt durch Änderung der Polarisation und der dadurch bedingten unterschiedlichen frequenzabhängigen Laufzeiten zur Verbreiterung gesendeter Impulse, wodurch empfangsseitig deren Erkennbarkeit reduziert und dadurch die übertragbare Datenrate begrenzt wird.

Die Polarisationsmodendispersion ist zudem von der Temperatur oder von mechanischer Beanspruchung abhängig. Deshalb werden adaptive PMD-Kompensatoren benötigt, die in den Übertragungspfad eingefügt werden. Ein PMD-Kompensator soll bei mindestens einer optischen Trägerfrequenz im Bereich des Übertragungsbandes das Polarisationsübertragungsverhalten des Gesamtsystems von Übertragungsstrecke und Kompensator näherungsweise (in erster oder ggf. auch höherer Ordnung) frequenzunabhängig machen. Dadurch können modulierte Signale verzerrungsfrei übertragen werden.

Im Wellenlängenmultiplexbetrieb WDM ist es anzustreben, diese Frequenzunabhängigkeit bei den einzelnen Übertragungsbändern (Übertragungswellenlängen), zumindest in jedem der einzelnen Kanäle zu erreichen. Anforderungen an einen solchen Transformator/Kompensator sind niedrige Einfügedämpfung, Kompatibilität zu Lichtwellenleitern, d.h. niedrige Koppeldämpfung und mechanische Kompatibilität, und ein möglichst variables veränderbares und frequenzabhängiges Polarisationsverhalten.

Zum Entwickeln von PMD-Kompensatoren und zum Prüfen der PMD-Toleranz nicht kompensierter Übertragungssysteme werden variabel einstellbare aber trotzdem kostengünstige und dämpfungsarme PMD-Emulatoren gebraucht, welche das frequenzabhängige Polarisationsübertragungsverhalten von Lichtwellenleiter-Strecken bis zu mehreren tausend Kilometern Länge unter den unterschiedlichsten Bedingungen (beispielsweise bei Temperaturschwankungen) in signifikanter Weise nachbilden können.

Aus der Patentanmeldung WO 95/34141 ist ein "Transmission System And Receiver With Polarisation Control" bekannt, der einen LiNBO₃-Kristall verwendet, dessen XY-Ebene quer zur Ausbreitungsrichtung Z steht. Die Ausbreitungsgeschwindigkeiten in X- und Y-Achse sind zunächst konstant. Durch Anlegen von Steuerspannungen werden sie jedoch in geringen Maße unterschiedlich, so daß eine Änderung der Polarisation erzielt wird. Für eine PMD-Kompensation sind Polarisationstransformatoren jedoch in der Regel ungeeignet, da hier große Laufzeitdifferenzen zwischen den einzelnen Moden auszuregen sind. Diese können einer Dauer von ca. 1/3 eines Bits bis zu mehreren Bits betragen.

Zur Kompensation von PMD eignen sich Kompensatoren,
welche die inversen Übertragungseigenschaften einer Übertragungsstrecke aufweisen. Aus der Literatur sind Kompensatoren bekannt, die durch Retarder/Polarisationsrotatoren realisiert sind, die zwischen stärker doppelbrechenden LWL-Stücken angeordnet sind. Retarder ist ein Oberbegriff für optische Übertragungsglieder, die zwei zueinander orthogonale Eigenmoden unverändert und mit gleicher, im Idealfall verschwindender Dämpfung, jedoch mit im allgemeinen unterschiedlichen Phasenverzögerungen übertragen.
Die stark doppelbrechenden LWL-Abschnitte erhalten oder bewahren zwei zueinander orthogonale Hauptpolarisationen und sind daher polarisationserhaltende Lichtwellenleiter PMF (polarization maintaining fiber). Diese PMF's sind stark polarisationsdispersiv, d.h. unterschiedliche Polarisationen führen zu stark unterschiedlichen Laufzeiten. Ein entsprechendes Beispiel ist im Tagungsband zur "Optical Fiber Communication Conference", 1995, OFC'95, der Optical Society of America als Beitrag WQ2 auf Seite 190 bis 192 beschrieben.

Im "IEEE Journal of Quantum Electronics", Band 18, Nr. 4, April 1982, Seite 767 bis 771 ist ein integrierter optischer Einseitenbandmodulator und Phasenschieber beschrieben. Dieser enthält auf einem Litiumniobat-Substrat eine sich über den Chip hinziehenden kammförmige Masse-Elektrode und in Reihe liegenden kammförmige Elektroden, deren Zinken mit den Zinken der Masseelektrode verschachtelt sind und von denen jeweils jede zweite mit einer ersten Steuerspannung bzw. zweiten Steuerspannung verbunden ist. Bei diesem Polarisationstransformator können nur die TE-TM-Modenwandlung mit ±45° linear bzw. mit zirkular polarisierten Eigenmoden vorgegeben werden. Der Anteil an TE-TM-Phasenverschiebung ist hier durch Chiplänge und -temperatur vorgegeben und kann nicht durch eine elektrische Spannung verändert werden. Nachteil auch dieser Anordnung ist, daß eine vorgegebene Polarisationstransformation nur für eine bestimmte optische Frequenz wirksam wird, die Frequenzabhängigkeit von Polarisationstransformatoren also nicht frei vorgegeben werden kann.

In "IEEE Journal of Quantum Electronics", Band 25, Nr. 8, 8. August 1989, Seite 1898 bis 1906 ist ein integrierter optischer Polarisationstransformator beschrieben, der als Substrat Lithiumniobat LiNbO₃ oder Lithiumtantalat LiTAO₃ verwendet. Dieser benötigt nur drei verschiedene Steuerspannungen, eine Phasenschieberspannung und zwei Modenwandlerspannungen, um eine gewünschte Polarisationsänderung zu bewirken. Die Phasenschieberspannung bewirkt eine Phasenverzögerung zwischen TE(transversal elektrischen)- und TM(transversal magnetischen)- Wellen; diese sind gleichzeitig die Eigenmoden, bewirkt jedoch keine Umwandlung ineinander. Eine der beiden Modenwandlerspannungen bewirkt eine TE-TM-Modenwandlung mit linearer Polarisation mit ±45° Erhebungswinkel als Eigenmoden, die andere bewirkt eine TE-TM-Modenwandlung mit zirkularen Polarisationen als Eigenmoden. Eine vorgegebene Polarisationstransformation wird jedoch nur für eine bestimmte optische Frequenz wirksam. Bei anderen optischen Frequenzen ergibt sich die Polarisationstransformation in Abhängigkeit der für diese bestimmte optische Frequenz eingestellten Polarisationstransformation.

Aus Proceedings of the Fourth European Conference on Integrated Optics ECIO 87, Glasgow, Scotland, Editors Wilkinson and Lamb, Seiten 115 bis 118 ist ein TE-TM-Transformator mit einfachen Elektrodenformen beschrieben.

Diese bekannten Anordnungen werden zur Polarisationstransformation eingesetzt, beispielsweise als Polarisationskompensatoren in Empfängern. Sie sind nicht als PMD-Kompensatoren geplant.

In Electronic Letters, 17. Februar 1994, Band 30, Nr. 4, Seite 348 bis 349 ist ebenfalls ein Verfahren zur PMD-Kompensation beschrieben. Hier werden als Übertragungselemente mehrere Abschnitte polarisationserhaltender Faser (PMF) verwendet, die durch Polarisationstransformatoren verbunden sind, und zur PMD-Kompensation ein Polarisationstransformator mit nachgeschalteter polarisationserhaltender Faser. Die auftretende Dämpfung dürfte wegen der notwendigen Spleißverbindungen sehr hoch sein.
Hier ist auch der Anschluß eines PMD-Kompensators an einen optischen Empfänger und die Gewinnung eines Regelkriteriums zur Einstellung des Kompensators beschrieben. Eine funktionell ähnliche Einrichtung wurde auch im Tagungsband der OEC '94 (Makuhari Messe, Japan), Beitrag 14E-12, auf den Seiten 258-259 beschrieben, die Zeitdifferenzen zwischen den Moden von 28 ps erreicht.

In der Praxis beschränken sich die in den genannten Literaturstellen beschriebenen Kompensatoren auf sehr wenige Abschnitte PMF. Dadurch kann es bei der Optimierung des Regelkriteriums zu einem Nebenoptimum kommen, so daß der Kompensator nicht optimal eingestellt wird.

In der deutschen Patentanmeldung Aktenzeichen: 198 16 178.6 ist ein PMD-Kompensator beschrieben, der nur aus PMF's besteht. Allerdings werden mechanisch bewegte Teile benötigt.

Aufgabe der vorliegenden Erfindung ist es daher, Verfahren zur PMD-Kompensation und einen PMD-Kompensator anzugeben, der über zahlreiche Einstellmöglichkeiten verfügt und innerhalb des genutzten Übertragungsbandes möglichst beliebige frequenzabhängige Polarisationstransformationen zum Zweck der gezielten Erzeugung von PMD ermöglicht.

Der Vorteil des erfindungsgemäßen PMD-Kompensators liegt in der universellen Anwendbarkeit. Das durch viele Parameter bestimmte Phänomen Polarisationsmodendispersion kann prinzipiell auch nur durch geeignete Einstellmöglichkeiten entsprechend vieler Freiheitsgrade kompensiert werden. Durch die individuellen Steuerspannungen können so viele unterschiedliche frequenzabhängige Polarisationstransformationen eingestellt und im Betrieb durchgeführt werden, daß beliebige PMD auch höherer als erster Ordnung mit sehr hoher Genauigkeit gebildet werden kann, sowohl zum Zwecke der PMD-Kompensation, als auch der PMD-Emulation.

Weitere Vorteile sind die bei integrierten optischen Bauelementen übliche kleine Baugröße und die Tatsache, daß im erfindungsgemäßen PMD-Kompensator die Funktionen der Polarisationstransformation und der Erzeugung unterschiedlicher Laufzeiten für unterschiedliche Polarisationen auf einem Bauelement integriert werden können.

Der PMD-Kompensator ist ebenfalls als PMD-Emulator oder auch als Polarisationstransformator einsetzbar.

Varianten des PMD-Kompensators ermöglichen noch kompaktere Bauweisen.

Die Erfindung wird anhand von Ausführungsbeispielen näher erläutert.

Es zeigen:
- Figur 1: den Aufbau eines erfindungsgemäßen Polarisationsmodendispersionskompensators,
- Figur 2: eine Variante mit sich überkreuzenden elektrischen Leitungen,
- Figur 3: eine Variante mit senkrecht zur Wellenleiterrichtung verlaufenden elektrischen Feldern,
- Figur 4: eine Variante mit gefaltetem Strahlengang,
- Figur 5: einen adaptiven Kompensator,
- Figur 6: einen Emulator,
- Figur 7: eine Variante eines erfindungsgemäßen Polarisationsmodendispersionskompensators mit einem anderen Kristallschnitt,
- Figur 8: eine weitere Variante ohne Elektrodenüberkreuzungen,
- Figur 9: eine Variante mit zinkenloser Masseelektrode,
- Figur 10: eine Variante mit optischen Verstärkern,
- Figur 11: ein Detail davon,
- Figur 12: eine Schnittdarstellung mit einem in ein Substrat eingebetteten Wellenleiter und
- Figur 13: eine Variante mit einem zweimodigen Wellenleiter.

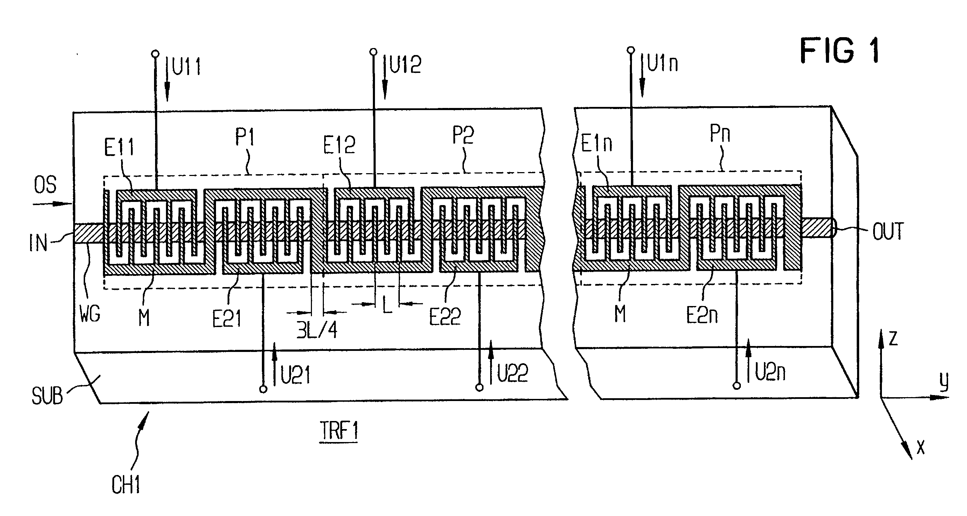

Figur 1 zeigt einen erfindungsgemäßen PMD-Kompensator TRF1. Dieser ist als Chip CH1 mit einem Lithiumniobat-Substrat SUB realisiert. Andere in Frage kommende Materialien sind Lithiumtantalat oder ähnliche hoch doppelbrechend Materialien.

Die kristallographischen Achsen Y und Z liegen in der Zeichenebene, die kristallographische Achse X geht in die Zeichenebene hinein. Auf der Oberfläche des Kristalls ist ein Wellenleiter WG durch Titandiffusion realisiert. Der Wellenleiter WG ist einmodig, so daß TE(transversal-elektrische)-und TM(transversal-magnetische)-Wellen sich mit einer Brechzahldifferenz von etwa 0,07 ausbreiten können.

Auf der Oberfläche des Substrats SUB sind elektrisch leitfähige Interdigital-Elektroden aufgedampft, die die Form eines Kammes aufweisen, dessen Zinken (Stichleitungen, Finger) quer zum Wellenleiter angeordnet sind. Eine Elektrode M mit ebenfalls quer zum Wellenleiter angeordneten Zinken verläuft mäanderförmig über den gesamten Chip und kann an Masse gelegt werden (Masse-Elektrode). Die anderen kammförmigen Modenwandler-Elektroden Eij (i= 1,2; j=1,2....n) sind voneinander elektrisch isoliert. Eine Spannung Uij an einer Elektrode erzeugt ein elektrisches Feld im Wellenleiter WG, das periodisch in Ausbreitungsrichtung Y oder entgegengesetzt hierzu verläuft. Direkt unter den Elektroden verläuft es periodisch in Richtung X oder entgegengesetzt hierzu. Die optische Welle bzw. das optische Signal OS durchläuft den Chip vom Eingang IN zum Ausgang OUT. Die Periodenlänge L zwischen den einzelnen Elektrodenzinken ist etwa gleich einer Schwebungswellenlänge zwischen TE- und TM-Welle gewählt. Eine Schwebungswellenlänge ist diejenige Länge, bei der der Retarder mit TEund TM-Wellen als Eigenmoden gerade eine Phasenverzögerung von 360° zwischen diesen Eigenmoden aufweist. Bei Mischpolarisationen wiederholen diese sich deshalb periodisch in Abständen von Vielfachen einer Schwebungswellenlänge. Bei einer optischen Wellenlänge von 1550nm (Nanometer) entspricht die Schwebungswellenlänge im Lithiumniobat etwa 21 µm. Die Zinkenbreite (Fingerbreite) und die Elektrodenabstände werden deshalb zweckmäßigerweise jeweils etwa gleich L/4 gewählt. Damit erhält man eine gleichförmige Struktur, in welcher Zinkenbreiten und Zwischenräume gleich groß sind. Um eine TE-TM-Konversion mit variabler Phase durchführen zu können, sind jeweils nach einigen Zinkenperioden zusätzliche Abstände von abwechselnd etwa L/4 und 3L/4 vorgesehen. Damit erhält man Phasenverzögerungen zwischen TE- und TM-Wellen von 90° bzw. 270° - durch letztere wird die erstere wieder rückgängig gemacht -, so daß sich TE-TM-Wandlung mit unterschiedlichem Phasenwinkel auswirkt. Dies wird jetzt näher erläutert: Bei einer reinen TE-Welle am Eingang des PMD-Kompensators oder eines Teils davon ergibt sich auch am Ausgang eine reine TE-Welle, sofern an den Elektroden keine Steuerspannungen anliegen. Für geeignet gewählte Ansteuerspannungen werde die eingangsseitige TE-Welle in eine reine TM-Welle gewandelt. Verkleinert man diese Ansteuerspannungen, so ergibt sich am Ausgang eine Mischung aus TE- und TM-Wellen, deren Phasenunterschied frei wählbar ist. Insbesondere ergibt sich bei etwa halbierten Ansteuerspannungen ein Ausgangspolarisationszustand, der zwischen 45° linear, rechtszirkular, -45° linear, linkszirkular und wiederum 45° linear einstellbar ist. Die Masse-Elektrode M hat an diesen Stellen jeweils eine Gesamtbreite von etwa L/2, bzw. L (Die Masse-Elektrode zwischen den Moden-Elektroden und Zellen könnte im Prinzip auch schmaler gemacht werden oder durch Bonddrähte ersetzt werden).

Jeweils mindestens zwei Modenwandler-Elektroden E1j und E2j, (j = 1,2...n) einschließlich des zugeordneten, in Elektroden E1j bzw. E2j verzahnten Masse-Elektroden-Segments, können als Zellen Pj aufgefaßt werden. Eine Zelle kann ebenfalls - wie eine Modenwandler-Elektrode - als Modenwandler aufgefaßt werden. Sofern die Modenwandlerelektroden modulo einer halben Schwebungswellenlänge des Substratmaterials verschiedene Positionen aufweisen, handelt es sich dann um einen Modenwandler, bei dem nicht nur Stärke und Vorzeichen, sondern auch die Phase der Modenwandlung gewählt werden kann. Bei mit zwei Elektroden aufgebauten Zellen können diese mit einem Paar Steuerspannungen angesteuert werden, die von zwei Parametern abhängig sind. Die Ausführungsbeispiele beschränken sich auf derartige Zellen. Es sind prinzipiell aber unterschiedlich große mit unterschiedlichen und/oder unterschiedlich vielen Elektroden aufgebaute Zellen oder unterschiedlicher Anordnungen der Modenwandler-Elektroden möglich. Jeder in doppelbrechendem Substratmaterial realisierter Polarisationstransformator kann eine Zelle sein.

Im Ausführungsbeispiel sind n Zellen vorgesehen, wobei als Anzahl n Werte von ca. 25 bis 50 realistisch sind. Die Spannungen an den Elektroden E1j und E2j der Zellen sind jedoch nicht jeweils identisch oder, wie in Proc. 4th European Conference on Integrated Optics (ECIO '87), Glasgow, UK, 11.-13.05.1987, S. 115-118 beschrieben als Funktion der longitudinalen Ortskoordinate sinusförmig variabel, sondern individuell oder in Gruppen frei einstellbar.

In Gruppen frei einstellbar bedeutet folgendes: Beispielsweise können Elektrodenspannungen von U1j U1(j+1), U1(j+2), ... bis U1(j+9), (j= 1, 11, 21,....) identisch sein, ebenso die Elektrodenspannungen U2j, U2(j+1), U2(j+2), ... bis U2(j+9), (j= 1, 11, 21,....). Es werden also in diesem Beispiel die Elektroden des Typs E1j von jeweils zehn benachbarten Zellen mit der gleichen Spannung versorgt, ebenso die Elektroden des Typs E2j von jeweils zehn benachbarten Zellen. Dies ist durch leitende Verbindungen zwischen den Elektroden leicht zu realisieren. Eine Grenze der Variabilität des PMD-Kompensators ist durch die Spannungsfestigkeit der Elektrodenzwischenräume gegeben. Idealerweise sollten Polarisationstransformationen auf beliebig kurzer Länge ausgeführt werden können, wodurch aber entsprechend hohe Spannungen erforderlich sind. Daher ist bei der Herstellung auf hohe Spannungsfestigkeit zu achten. Diese kann beispielsweise durch Aufbringen von Isolierschichten auf die Kristalloberfläche erfolgen.

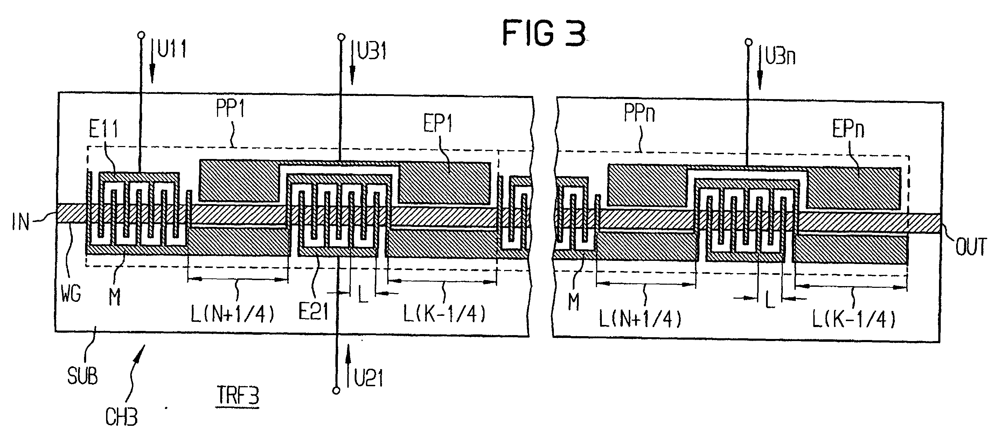

Während beim Stande der Technik durch zwei wählbare Modenwandlerspannungen oder Modenwandlerspannungsparamter nur eine Polarisationstransformation, welche zwei Freiheitsgrade besitzt, für eine optische Frequenz spezifiziert werden kann, während die Polarisationstransformationen für alle anderen optischen Frequenzen sich daraus ergeben, sind erfindungsgemäß durch Kaskadierung mehrerer Modenwandler-Elektroden, Zellen oder Zellengruppen, die individuell oder gruppenindividuell mit im allgemeinen je zwei wählbaren Modenwandlerspannungen angesteuert werden können, Polarisationstransformationen bei mehreren optischen Frequenzen in weiten Grenzen unabhängig voneinander vorgebbar. Dies gilt auch für die weiteren Ausführungsbeispiele der Erfindung, wobei in dem in Figur 3 dargestellten Beispiel statt zwei jeweils drei Ansteuerspannungen und dadurch drei Freiheitsgrade je Zelle vorgesehen sind. In jedem Beispiel betrifft der zusätzliche Freiheitsgrand jedoch nicht die Modenwandlung, sondern eine differentialle Phasenverschiebung. Letztere kann zur Auswahl der Betriebswellenlänge dienen. Selbstverständlich beinflußt sie auch die erzeugte oder kompensierte PMD, doch die in der Umgebung optimal eingestellter Betriebswellenlänge erzielbaren Änderungen der PMD durch die differentielle Phasenverschiebung sind in der Regel auch durch Ansteuerung der Modenwandlerelektroden zu erreichen. Ein wesentlicher Grund für eine Verwendung auch differentieller Phasenverschiebung ist daher die Anpassung des PMD-Kompensators an die gewünschte Betriebswellenlänge.

Ein einziger Modenwandler, der in doppelbrechendem Substratmaterial realisiert ist und dessen Modenwandlungsphase durch zwei Parameter in Phase und in Quadratur einstellbar ist, kann PMD nur in Sonderfällen günstig beeinflussen oder gar kompensieren. Für eine technisch sinnvolle PMD-Kompensation ist er nicht geeignet.
Erfindungsgemäß wird jedoch wenigstens ein weiterer Modenwandler hinzugefügt, der mindestens eine weitere Steuerspannung aufweist, wobei die insgesamt mindestens drei der Modenwandlung dienenden Steuerspannungen aller verwendeten Modenwandler durch mindestens drei Parameter bestimmt werden. Im einfachsten Fall sind die Parameter identisch mit den verwendeten Steuerspannungen. Die sinnvolle untere Anzahl der Steuerspannungen liegt bei 4 bis 6, umfaßt also mindestens z.B. zwei Zellen mit je zwei Modenwandler Elektroden. Zweckmäßige Ausgestaltungen arbeiten mit mindestens 10 unterschiedlichen Steuerspannungen.

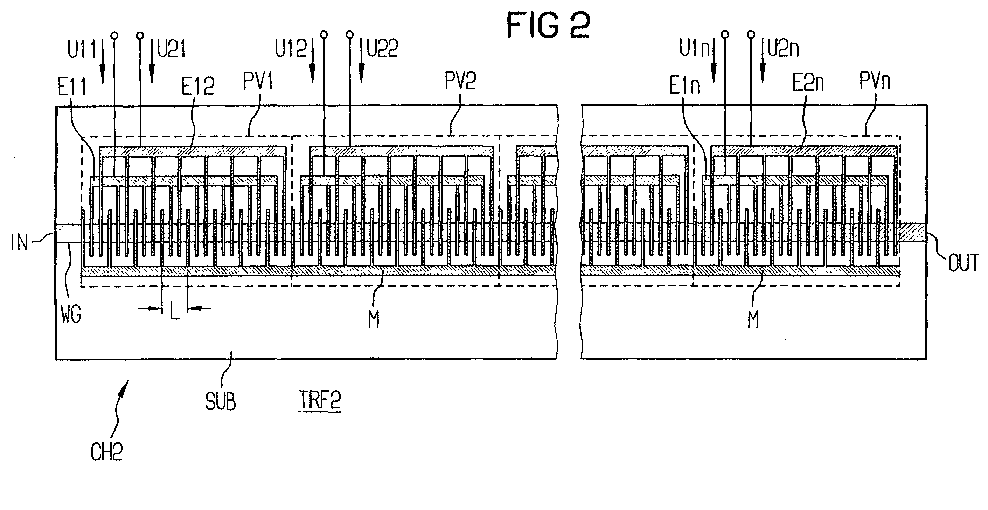

Falls man bereit ist, eine kompliziertere Verdrahtung auf dem Chip in Kauf zu nehmen, beispielsweise durch Überkreuzung elektrischer Leitungen, so kann mittels isolierender Zwischenschichten die Variante TRF2 nach Figur 2 realisiert werden. Die Zinken der Moden-Elektroden E11 und E12; E21 und E22, ... bis En1 und En2 liegen hier jeweils nacheinander zwischen zwei Zinken der Masse-Elektrode M. Bei gleicher Maximalstärke des longitudinalen elektrischen Feldes kann diese Variante Polarisationtransformationen auf einer etwas kürzeren Strecke ausführen als der PMD-Kompensator nach Figur 1 und bietet daher eine größere Variabilität der Polarisationstransformation bei gleicher Gesamtlänge des Chips CH2. Die Periodizität der Elektrodenzinken beträgt weiterhin L. Deren Breite und die Abstände betragen etwa L/6. Es ist nicht erforderlich, größere Abstände bzw. Breiten der Masse-Elektrode einzuführen.

Ein weiteres Ausführungsbeispiel TRF3 des Transformators ist in Figur 3 dargestellt. Es kann auch vorteilhaft sein, eine transversalelektrische-transversalmagnetische Phasenverschiebung, wie aus "IEEE Journal of Quantum Elektronics", Band 25, Nr. 8, Seite 1898 bis 1906 bekannt, durch senkrecht zum Wellenleiter entlang der kristallographischen Z-Achse verlaufende elektrische Felder einzubringen. Vorteilhaft ist die dadurch erzielbare, durch drei Freiheitsgrade gekennzeichnete elliptische Polarisationstransformation, welche bei der Kompensation von PMD ein etwas leichter zu beherrschendes Regelverhalten bewirken kann und vor allem, wie oben erwähnt, eine Anpassung des PMD-Kompensators an die gewünschte Betriebswellenlänge bewirken kann, nachteilig sind dagegen die kleineren elektrooptischen Koeffizienten, die nur geringere Phasenverschiebungen ermöglichen. Die Zellen PPj (j=1,2,...n) des Chips CH3 enthalten ebenfalls Modenwandler-Elektroden E11, E21, ..., die mit Spannungen U11, U21, .... angesteuert werden. Zwischen den Modenwandler-Elektroden sind Phasenschieber-Elektroden EP1, ... angeordnet, die mit Spannungen U3j (j=1, 2...n) angesteuert werden. Diese können individuell oder in Gruppen individuell frei gewählt werden, d.h. es können beispielsweise die Spannungen U3j, U3(j+1), U3(j+2),... bis U3(j+9), (j= 1, 11, 21,....) der durch unterschiedliche Indizes j gekennzeichneten Gruppen innerhalb jeder Gruppe identisch gewählt werden.Die Phasenschiebersektionen der Phasenschieberelektroden haben unterschiedliche Längen, die jeweils ein ganzzahliges Vielfaches der Schwebungswellenlänge um ein Viertel der Schwebungswellenlänge über- oder unterschreiten, alsoL(N+¼) oder L(K-¼) N, K = 1, 2, 3,.... Auf diese Weise bilden, wie schon in Figur 1, die kammförmigen Elektroden zwei Gruppen E11 bis Ein und E21 bis E2n, welche jeweils TE-TM-Wandlung mit gleicher Phase bewirken. Bei Bedarf können deshalb wiederum einige an einer Gruppe Elektroden benachbarter Zellen anliegende Spannungen, also beispielsweise U1,1 bis U1,10, U1,11 bis U1,20, .... , also U1j bis U1(j+9), j= 1, 11, 21,....) identisch sein, ebenso die Spannungen U2j bis U2(j+9), (j= 1, 11, 21,....). Sofern man diesen Vorteil nicht wahrnehmen möchte, können alle Elektroden, wie auch in Figur 1 oder 2 möglich, individuell angesteuert werden.

In der Integrierten Optik ist ein Wechsel zwischen verschiedenen Kristallschnitten und Materialien durchaus üblich. Beispielsweise wurde im IEEE J. Lightwave Technology, LT-5, Nr. 9, 1987, S. 1229-123/8, in der dort vorhandenen Fig. 3 dargelegt, daß ein integriert-optisches Bauelement, dort ein Modulator, gleichermaßen mit X-Schnitt und mit Z-Schnitt ausgeführt werden kann. In jenem Beispiel wird beim Übergang von Z- zu X-Schnitt die Elektrodenkonfiguration gewechselt, weil weiterhin derselbe elektrooptische Koeffizient ausgenutzt werden soll und das elektrische Feld deshalb entlang derselben Kristallachse, in jenem Beispiel die Z-Achse, verlaufen soll.

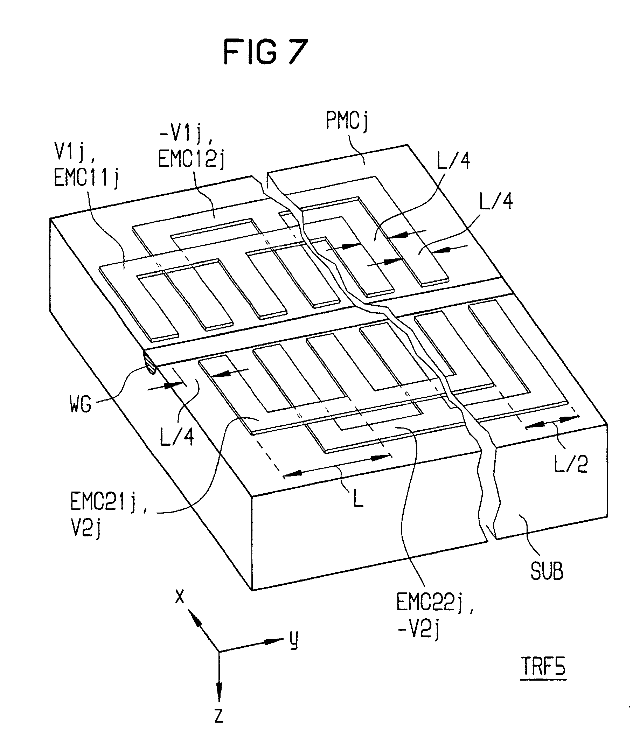

Auch die Ausführungsbeispiele der Figuren 1 bis 3 können in analoger Weise abgewandelt werden, wie in Figur 7 dargestellt ist. In den Figuren 1 bis 3 sollen die Modenwandler Modenwandlung zwischen Z- und X-Polarisation durchführen. In Lithiumniobat erfolgt dies unter Verwendung des elektrooptischen Koeffizienten r51 durch ein mit der Schwebungswellenlänge L des doppelbrechenden Wellenleiters WG periodisches quasistatisches elektrisches Feld in X-Richtung. Während die Figuren 1 bis 3 also beispielsweise unter Verwendung von Lithiumniobat mit X-Schnitt und Y-Ausbreitungsrichtung realisiert werden können, kann das Ausführungsbeispiel TRF5 der Figure 7 beispielsweise unter Verwendung von Lithiumniobat mit Z-Schnitt und Y-Ausbreitungsrichtung implementiert werden. Diese Orientierung der Kristallachsen ist in Figur 7 eingezeichnet. Während in den Figuren 1 bis 3 die auf der Zeichenebene senkrecht stehenden, also entlang der X-Achse verlaufenden periodischen elektrischen Felder die Modenkonversion zwischen X- und Z-Achse bewirken, sind es in Figur 7 die in der Zeichenebene transversal zum Wellenleiter WG verlaufenden, also wiederum entlang der X-Achse verlaufenden periodischen elektrischen Felder. Eine geeignete Anordnung als Ausschnitt des Substrats SUB zeigt die Figur 7. Dargestellt ist ein Modenwandler PMj (j = 1 ... n), welcher bei gruppenindividueller Ansteuerung Teil eines größeren Modenwandlers ist. Auf jeder Seite des Wellenleiters WG sind kammförmige Elektroden EMC11j, EMC12j, EMC21j, EMC22j (j = 1 ... n) angebracht. Die Elektroden EMC11j, EMC21j, EMC12j, EMC22j enden transversal etwa an den Rändern des Wellenleiters WG, um ein möglichst großes Überlappintergral von optischen und elektrischen Feldern zu erzielen. Zwischen Chipoberfläche und Elek troden sowie zur notwendigen Isolation zwischen sich überkreuzenden Elektroden können die üblichen isolierenden Pufferschichten, z.B. SiO2, aufgebracht sein. Die Elektroden EMC11j, EMC12j auf einer Seite werden mit Modenwandlerspannungen V1j bzw. -V1j beaufschlagt. Die Elektroden EMC21j, EMC22j auf der anderen Seite werden mit Spannungen V2j und -V2j beaufschlagt. Sie sind gegenüber den Elektroden auf der vorgenannten Seite um ein Viertel L/4 einer Schwebungswellenlänge L des doppelbrechenden Kristalls SUB in Ausbreitungsrichtung Y verschoben. Bei anderen Abständen als L/4 entsprechen V1j und V2j nicht in Quadratur, sondern mit entsprechenden anderen Phasenwinkeln gegeneinander verschobenen Modenwandlungen. Auch die Elektrodenabstände auf einer Seite des Wellenleiters und die Elektrodenbreite betragen etwa L/4. Die beiden kammförmigen Elektroden auf jeweils einer Seite sind durch eine isolierende Zwischenschicht an den Überkreuzungspunkten gegeneinander isoliert, besitzen Perioden von jeweils einer Schwebungswellenlänge L und sind gegeneinander um die Hälfte L/2 einer Schwebungswellenlänge L verschoben. Durch Modenwandlerspannungen V1j und V2j und die davon abhängigen invertierten Spannungen -V1j, -V2j (d.h, die gegenüber den Spannungen V1j und V2j gerade entgegengesetzten Spannungen) kann Modenwandlung in Phase und in Quadratur ausgeübt werden, was endlose Polarisationstransformation und endlose Phasenverschiebung modengewandelter Signale erlaubt.

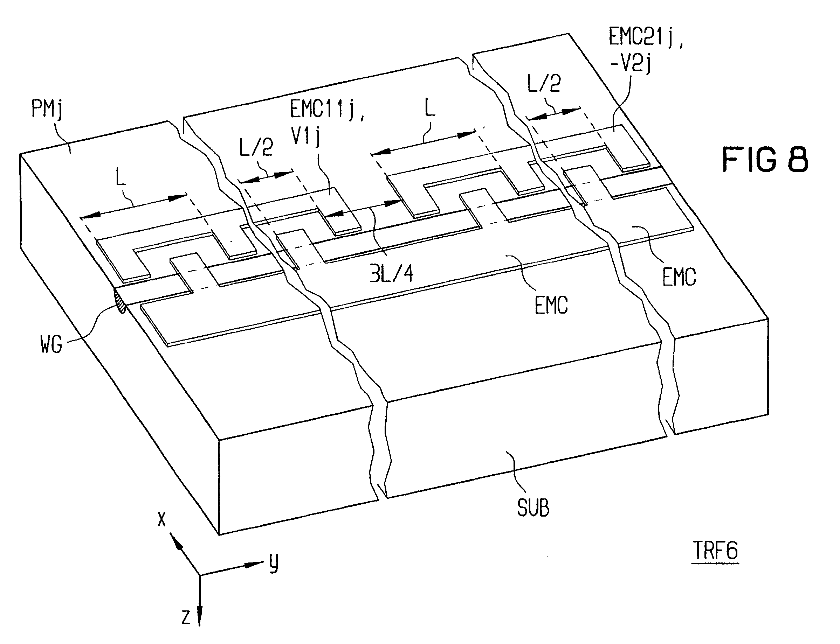

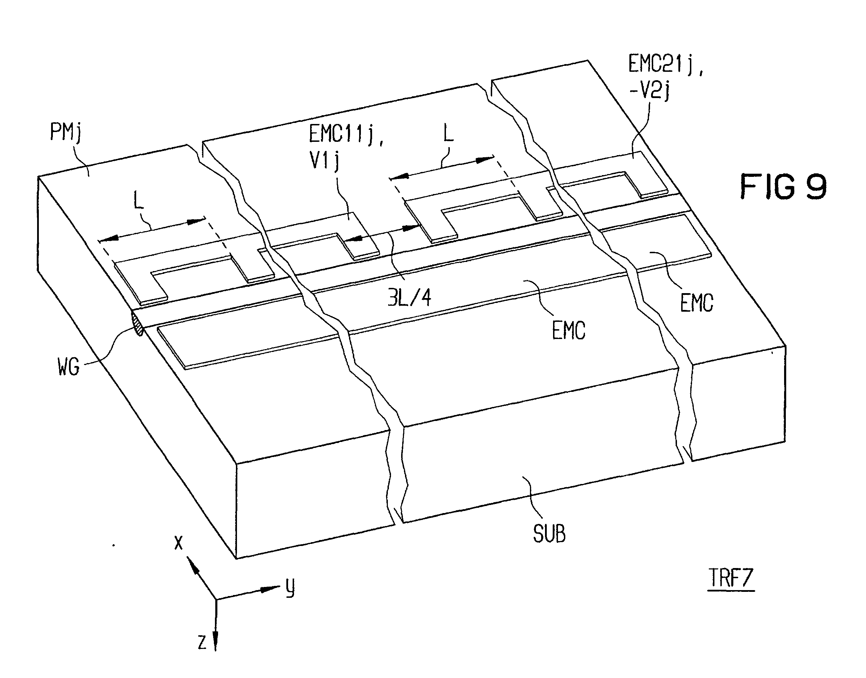

In einem anderen in Figur 8 dargestelltem Ausführungsbeispiel TRF7, wird eine der Modenwandlerelektroden auf einer Seite des Wellenleiters weggelassen. Auf der anderen Seite werden beide Elektroden durch eine Masseelektrode EMC ersetzt. Zur Verbesserung der Effizienz kann die Elektrode EMC Nasen besitzen, welche den Wellenleiter überlappen, sie muß es aber nicht (Figur 9, TRF7). Die Anordnung hat den Vorteil, daß die verbleibenden Elektroden EMC11j, EMC21j, EMC überkreuzungsfrei sind. Dieses Ausführungsbeispiel eines Modenwandlers PMj (j = 1 ... n) erlaubt Modenwandlung ebenfalls in beiden Quadraturen, aber nur dadurch, daß neben einer ersten Modenwandlerelektrode EMC11j mit Spannung V1j noch eine zweite Modenwandlerelektrode EMC21j mit Spannung V2j vorgesehen ist. Die beiden Elektroden sind um ein ungeradzahliges Vielfaches 3L/4 eines Viertels L/4 einer Schwebungswellenlänge L in Ausbreitungsrichtung Y auf einem Chip SUB gegeneinander versetzt aufgebracht. Zur Erzielung großer in Phase und in Quadratur frei wählbarer Modenwandlungsgrade sind mehrere oder viele Modenwandler PMj (j = 1 ... n), vorzugsweise mit Abständen von eines ganzzahligen (oder auch halbzahligen) Vielfachen der Schwebungswellenlänge L als Abstand zwischen einer Elektrode EMC11j und der entsprechenden Elektrode EMC11 (j+1) des darauffolgenden Modenwandlers PM(j+1). Diese Kaskadierung erfolgt analog zu Figur 1.

Eine größere Bandbreite als in Lithiumniobat, allerdings bei geringerer Kompensationsmöglichkeit von PMD läßt sich z.B. durch Lithiumtantalat erreichen, welches eine geringere Doppelbrechung und demnach eine größere Schwebungswellenlänge L aufweist.

Eine alternative Ausführungsform von Modenwandlern, welche der Ausführungsform der Figuren 7 und 8 ähnelt, aber speziell für III/V-Halbleiter wie GaAs und InP verwendet werden kann, ist im Tagungsband zur European Conference on Integrates Optics ECIO 1987, Glasgow, 11.-13. Mai 1987, S. 115-118 und im Tagungsband zur European Conference on Optical Communications 1990, S. 309-312 beschrieben. In III/V-Halbleitern können auch optische Verstärker implementiert werden. Dies hat den Vorteil, daß die Dämpfung des PMD-Kompensators bereits auf dem Chip wieder ausgeglichen werden kann. Als nachteilig könnte man bewerten, daß die Verstärkung in III/V-Halbleitern i.a. polarisationsabhängig ist. Es ist jedoch möglich, beispielsweise durch unterschiedlich verspannt Quantentöpfe, Verstärker zu bauen, welche TE stärker als TM oder umgekehrt verstärken. Durch Kaskadierung zweier gegensätzlicher Verstärker, deren Verstärkung jeweils durch Pumpströme geregelt werden kann, kann so polarisationsunabhängige Verstärkung erreicht werden. Da auch die Dämpfung in III/V-Materialien stärker polarisationsabhängig ist als beispielsweise in Lithiumniobat, kann man jene Polarisationsabhängigkeit durch eine entgegengesetzte Polarisationsabhängigkeit des oder der eingebauten optischen Verstärker beheben.

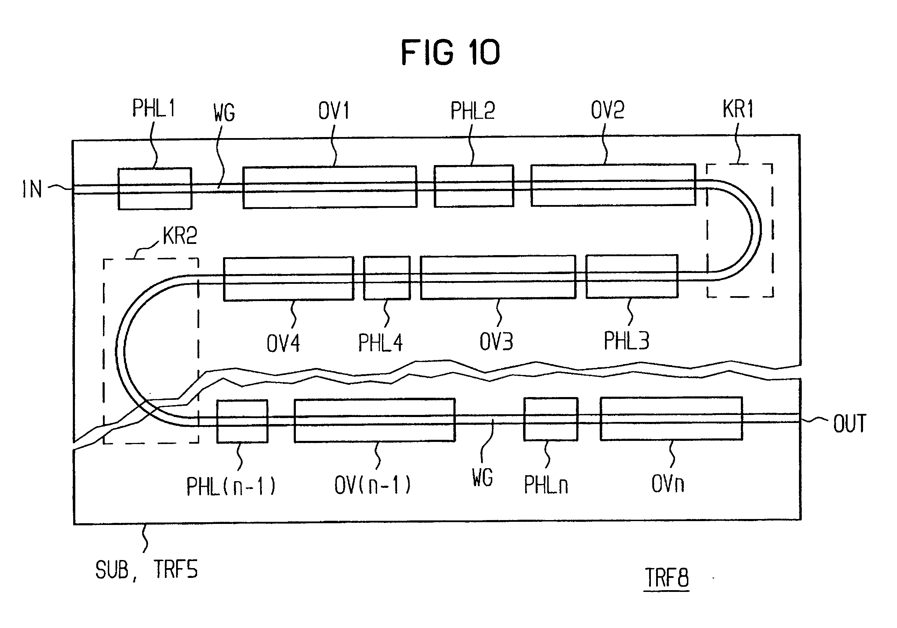

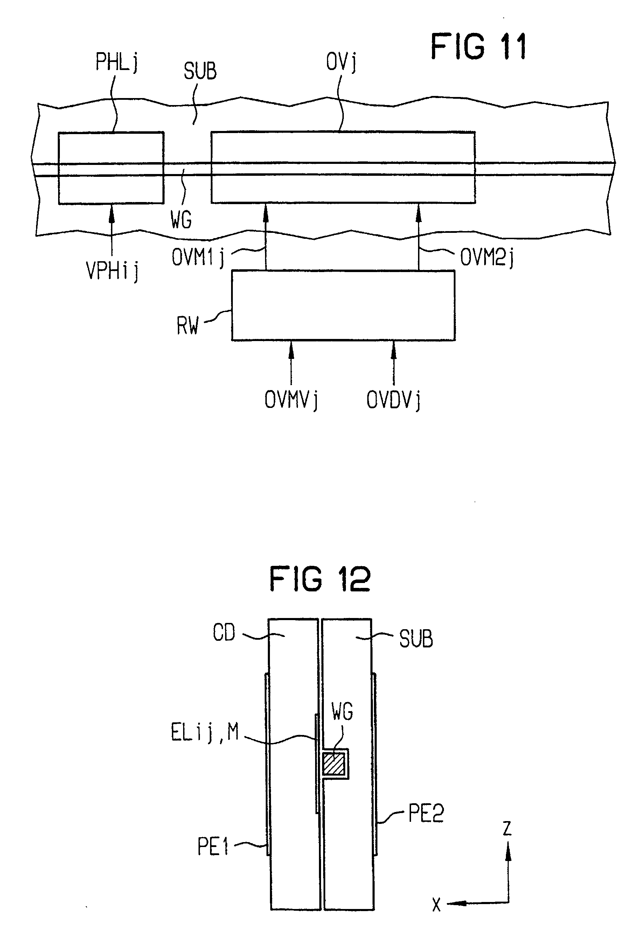

Auch auf optischen Übertragungsstrecken gibt es polarisationsabhängige Verluste, auch genannt polarization-dependentloss, PDL. Sie entstehen beispielsweise durch polarisationsabhängige Isolatoren oder Koppler. Wirkt PDL in Anwesenheit von PMD, so entstehen Zusatzverluste bei der Übertragung. In einem speziellen Ausführungsbeispiel eines Polarisationsmodendispersionskompensators TRF8 sind gemäß Figur 10 auf dem Substrat SUB deshalb neben Modenwandlern PHLj (j = 1...n) auch optische Verstärker OVj (j = 1...n) vorgesehen. In Figur 11 sind als Detailausschnitt der Figur 10 ein bestimmter Modenwandler PHLj und ein vor- oder nachgeschalteter optischer Verstärker OVj gezeigt. Ersterer erhält Steuersignale VPHLjp (j = 1...n; p=1...f). Der Index p mit einem Maximalwert f bezieht sich auf die Anzahl von in jeweils einem Modenwandler PHLj verfügbaren Modenwandlersteuersignalen. Letztere erhalten Pumpsignale OVPmj (m = 1...2; j = 1...n).

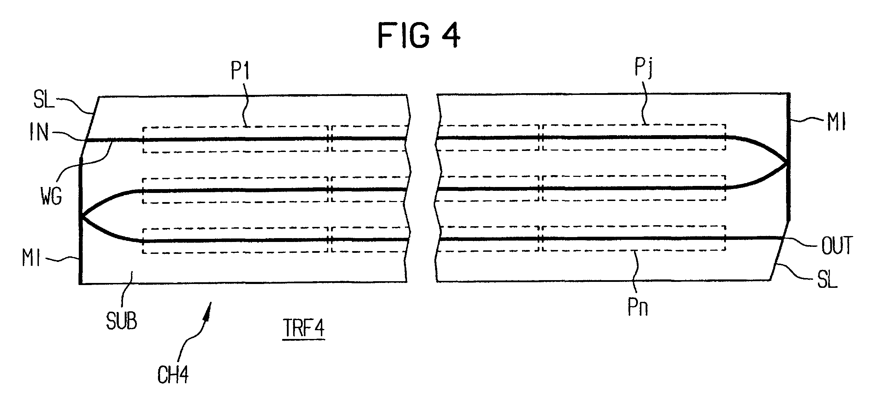

Durch die Pumpsignalanschlüsse OVM1j wird stärker die TE-, durch Pumpsignalanschlüsse OVM2j wird stärker die TM-Verstärkung beeinflußt. Die Signale OVM1j, OVM2j können also durch geeignete Kombinationen, beispielsweise Linearkombinationen, von Signalen OVMVj, OVDVj erzeugt werden, von denen das eine, OVMVJ, wenigstens näherungsweise nur die mittlere Verstärkung und das andere, OVDVj wenigstens näherungsweise nur die differentielle TE-TM-Verstärkung beeinflußt. Diese Kombinationen können wie in Figur 10 gezeigt in einem beispielsweise aus Wiederständen und Operationsverstärkern oder durch ein Mikroprozessorprogramm implementierten Rechenwerk RW gebildet werden. Erfindungsgemäß läßt sich durch Variation der Signale OVDVj zusätzlich zu den Modenwandlersignalen VPHLij der Modenwandler PHLj neben PMD auch gleichzeitig vorhandenes PDL ausgleichen.
In diesem Ausführungsbeispiel können statt Reflektoren der Figur 4 so wie in Figur 10 gezeigt Krümmungen KR1, KR2 des Wellenleiters WG zur Stahlumlenkung vorgesehen sein. Solche Krümmungen können, wie in Electronics Letters, 15. April 1999, Band 35, No.8 auf S. 654 bis 655 dargestellt, durch photonische Bandlückenmaterialien implementiert werden.

Die Kompensation oder Erzeugung von PDL zusammen mit der Kompensation oder Emulation von PMD ist übrigens nicht nur auf Halbleitermaterialien oder auf Materialien mit optischen Verstärkern beschränkt. Auch in passiven Materialien wie z.B. Lithiumniobat lassen sich dichroitische Elemente OVj, wie z.B. alle polarisationsabhängigen Koppler, deren Kopplung elektrooptisch verändert werden kann, oder polarisationsabhängige Interferometer so einsetzen, daß mittels Steuersignalen OVDVj die Differenz der Dämpfungen bestimmter orthogonal zueinander polarisierter Wellen, insbesondere TE und TM, eingestellt werden kann. In diesem Fall ist Figur 10 auch ein Blockschaltbild für solche Ausführungsbeispiele der Erfindung.

Figur 4 zeigt ein Ausführungsbeispiel TRF4 des PMD-Kompensators mit einem gefalteten Strahlengang des Wellenleiters WG. Die Enden eines Chips CH4 sind mit metallischen oder dielektrischen Spiegeln MI versehen. Kurz vor dem Auftreffen auf einen Spiegel ist der Wellenleiter WG gekrümmt, so daß eine möglichst ideale Reflexion und Einspeisung in den nächsten Abschnitt erfolgt. Die Verspiegelung kann durch Koppler ersetzt werden, in deren Mitte sich der Spiegel befindet.
Dies setzt die Anforderungen an die Genauigkeit der longitudinalen Position der Spiegel MI herab, bewirkt aber bei nicht exakter Herstellung stärkere unerwünschte Reflexionen.

Im Bereich des Eingangs IN und des Ausgangs OUT sind die Wellenleiter-Enden unter einem Winkel von z.B. 6° bis 8° abgeschnitten, so daß ein sehr reflexionsarmer Übergang zwischen dem Wellenleiter WG und einem externen Quarzglas-Wellenleiter erfolgen kann. Das schräge Abschneiden könnte auch bei den Chips der Figuren 1 bis 3 eingesetzt werden. Auch sind andere reflexionsarme Übergänge wie eine dielektrische Entspiegelung möglich. Die einzelnen Zellen P1, P2, Pj, Pn können wie in den Figuren 1 bis 3 gestaltet sein.

Zu ergänzen ist noch, daß auch die Möglichkeit besteht, durch Temperaturänderung des Chips das Transformationsverhalten zu ändern. Wenn dieser Effekt nicht gewünscht wird, ist daher die Temperatur des Chips konstant zu halten oder durch die Einbeziehung in eine Regelung zu berücksichtigen.

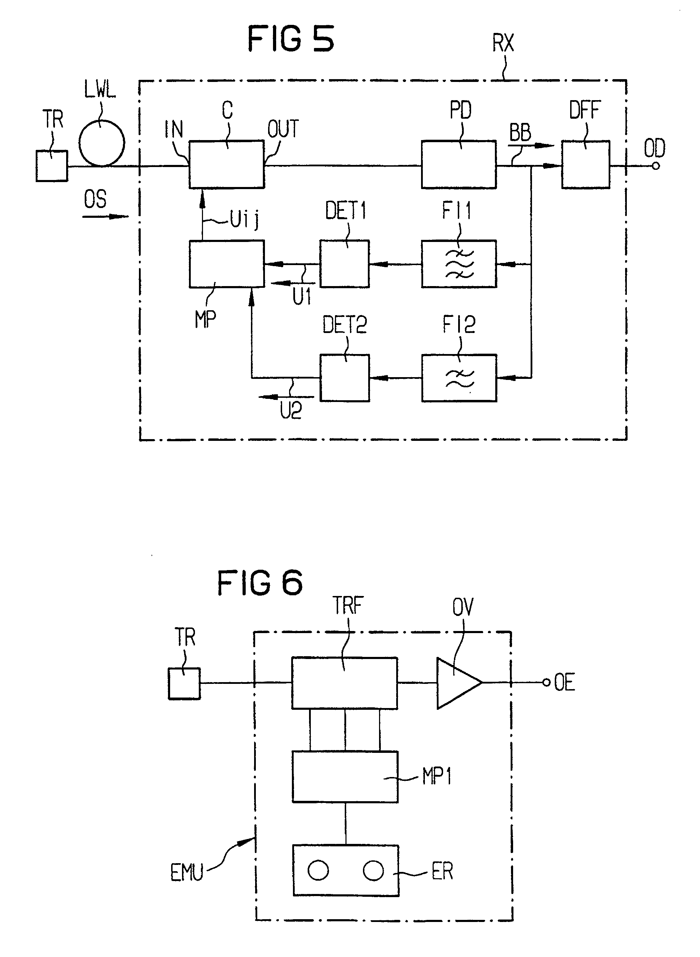

Figur 5 zeigt die Verwendung als adaptiven PMD-Kompensator C. Es ist eine Übertragungsstrecke mit einem optischen Sender TR, einer mit einem Lichtwellenleiter LWL realisierten Übertragungsstrecke und einem optischen Empfänger RX dargestellt. Der Empfänger enthält eine Fotodiode PD, der ein Entscheider DFF nachgeschaltet ist. Beim Ausgang OD des Entscheiders wird das übertragene Datensignal abgegeben.

Der Fotodiode ist der PMD-Kompensator zur Kompensation der Polarisationsmodendispersion des optischen Signals OS vorgeschaltet. Weitere Details wie Verstärker wurden aus Gründen der Übersichtlichkeit nicht dargestellt.

Das Regelkriterium wird beispielsweise aus dem am Ausgang der Fotodiode abgegebenen Basisbandsignal BB gewonnen. Dies erfolgt beispielsweise über ein Filter FI1, das als Bandpaß mit einer Resonanzfrequenz von etwa der halben Symbolrate der übertragenen (binären) Daten ausgebildet ist. Dies ist dann zweckmäßig, wenn die maximal auftretenden PMD-Werte geringer als eine Symboldauer des Datensignals sind. Das Filter kann aber auch als Tiefpaßfilter ausgebildet sein, dessen Grenzfrequenz ca. 1/10 bis ¼ der Symbolrate beträgt. Damit lassen sich auch größere PMD-Werte eindeutig detektieren. Hinter dem Filter ist ein erster Detektor DET1 angebracht, beispielsweise ein Gleichrichter. Die so gewonnene Detektorausgangsspannung U1 wird einem Regler MP zugeführt, vorzugsweise einem Mikroprozessor mit Analog-Digital- und Digital-Analog-Wandlern, sowie Operationsverstärkern zur Ansteuerung des PMD-Kompensators C.

Um sowohl kleine als auch große PMD-Werte eindeutig detektieren zu können, können auch weitere Filter und Detektoren FI2 und DET2 vorgesehen werden.

Bei Verwendung des Bandpaßfilters wird die Ausgangsspannung U1 dann maximal, wenn die Augenöffnung des Basisbandsignals BB maximal ist. Dies entspricht im Fall einer unverzerrten optimalen Übertragung. Auch bei der Verwendung eines Tiefpaßfilters wird die Detektorausgangsspannung U2 maximal, wenn die Augenöffnung des Basisbandsignals maximal ist.

Ausgangssignale des Reglers sind die Spannungen Uij (i=1, 2, 3; j = 1, 2, ....n), die der PMD-Kompensator benötigt. Der Regler MP variiert die Spannungen Uij einzeln oder in Gruppen. Es werden diejenigen Spannungen beibehalten, durch die sich die größtmöglichen Detektorausgangsspannungen erzielen lassen. Auf diese Weise wird die Polarisationsmodendispersion der Übertragungsstrecke durch den PMD-Kompensator optimal kompensiert.

Der Einsatz des PMD-Kompensators als Emulator EMU ist in Figur 6 dargestellt. Über eine Einstelleinrichtung ER erhält ein Mikroprozesser MP1 Signale, die er in entsprechende Steuerspannungen Uij umsetzt. Die Steuerspannungen Uij könnten in einer einfachen Version auch durch Potentiometer eingestellt werden.

Die von dem Sender TR eingespeisten optischen Signale werden transformiert am Ausgang OE eines Verstärkers OV abgegeben. Letzterer kann auch entfallen.
Außer den genannten Materialien Lithiumniobat, Lithiumtantalat und III/V-Halbleitern gibt es noch viele weitere Möglichkeiten zur Implementierung von PMD-Kompensatoren auf einem Chip oder Substrat SUB. Chip/Substrat können doppelbrechend sein, so daß der Wellenleiter WG doppelbrechend ist, doch Chip/Substrat können auch nicht doppelbrechend (isotrop) sein, sofern der Wellenleiter WG selbst aus doppelbrechendem Material besteht.

Beispielsweise kann der Wellenleiter WG aus einem Flüssigkristall oder einem flüssigen oder festen Polymer bestehen. Zur Herstellung wird ein Wellenleiterkanal in einem Substratmaterial abgeformt. Falls erforderlich, erfolgt eine anfängliche Orientierung dieser Wellenleitermaterialien durch elektrische Felder.

Im Ausführungsbeispiel der Figur 12 ist ein Chip/Substrat SUB, vorzugsweise aus Polymer, mit aufgelegter Deckplatte CD im Querschnitt von einer Stirnfläche aus zu sehen. Die Kristallachsen X und Z des Wellenleiters WG liegen gemäß Figuren 1 bis 3 entspricht; letztere Figuren zeigen Ausführungsbeispiele gemäß Figur 11 in Aufsicht, bei Durchsicht durch den Substratdeckel CD. Bei anderen Ausführungen, beispielsweise gemäß Figuren 7 bis 10, können die Kristallachsen auch anders liegen. Auch die Deckplatte CD kann aus Polymer sein; denkbar sind für Substrat und Deckplatte aber auch Materialien wie Quarzglas (Siliciumdioxid) und Silicium und andere optisch gering dämpfende Materialien.
Die Herstellung von Wellenleitern und V-Nuten zur Lichtwellenleiterankopplung durch harte Stempel, die in Polymere eingedrückt werden, ist in Electronics Letters, 9. Juli 1998, Band 34, Nr. 14, Seiten 1396 bis 1398 angegeben sowie in den dort erwähnten Literaturstellen.
Feste Polymere mit gutem elektrooptischem Koeffizienten r33 sind im Tagungsband der 24^{th} European Conference of Optical Communications, Madrid, 20. Bis 24. September 1998, Seiten 501 bis 502 angegeben. Für die hier geforderte Anwendung sind allerdings andere elektrooptische Koeffizienten gefordert.

In einem weiteren Ausführungsbeispiel gemäß Figur 11 besteht der Wellenleiter WG aus einem ferroelektrischen Flüssigkristall, welcher doppelbrechend ist. Der Wellenleiter ist in einer Aussparung des Polymersubstrats an der Oberfläche des Polymersubstrats eingebracht. Die Fertigung der Aussparung kann durch einen Metallstempel bei der Fertigung des Substrats oder danach erfolgen. Auf der Deckplatte sind Elektroden Elij, M angebracht, beispielsweise durch Aufdampfen. Sofern ein beträchtlicher Teil des optischen Feldes in die Elektroden hinein ausstrahlt, was in der Zeichnung der Fall ist, ist ein optisch verlustarmes Material wie Indium-Zinn-Oxid (ITO) für die Elektroden zu verwenden. Die Elektroden besitzen auch Zuleitung, so daß an sie von außen eine Spannung angelegt werden kann.
Der ferroelektrische Flüssigkristall wird so orientiert, daß er ohne Anlegen elektrischer Felder zwischen den Elektroden für transversale elektromagnetische Felder in Z-Richtung (in der Zeichenebene des rechten Bildteils) eine andere Brechzahl besitzt als in X-Richtung (siehe linker Bildteil). Durch elektrostatische Feldanteile in Y-Richtung ändern sich jedoch die Hauptachsen der Doppelbrechung. Die Winkeländerung der Hauptachsen wird als Tiltwinkel bezeichnet. Dieser läßt sich bei Clark-Lagerwall-Schaltern stark aber nicht hysteresefrei, bei deformed-helix ferroelektrischen Flüssigkristallen (DH-FLC) ebenfalls stark und bei elektroklinen Flüssigkristallen (elektrokline FLC) schwächer, aber relativ schnell verändern. Für diese Bauelement erscheinen elektrokline und DH-FLC die geeignetsten Kandidaten zu sein.
Der elektrokline Effekt wird beispielsweise in den Physical Review Letter, Band 38, 1977, ab Seite 848 beschrieben. Der deformed-helix ferroelektrische Effekt wird in Liquid Crystals, Band 5, 1989 ab Seite 1171 beschrieben. Eine breite Übersicht über ferroelektrische Flüssigkristalle bietet "Ferroelectric Liquid Crystals - Principles, Properties and Applications", Band 7 der Reihe "Ferroelectricity and Related Phenomena", Editor George W. Taylor, Gordon and Breach Science Publishers, ISBN 2-88124-282-0.

Die weitere Funktion dieses Ausführungsbeispiels der Erfindung wurde schon in Zusammenhang mit den Figuren 1 bis 3 beschrieben.

Da der Brechzahlunterschied zwischen den beiden Eigenmoden (hier X-polarisiert und Z-polarisiert) grö0er sein kann als in Lithiumniobat, erhält man bei gegebener Baulänge eine größere differentielle Gruppenlaufzeit, was zur PMD-Kompensation vorteilhaft ist. Ein weiterer Vorteil ist der große elektrooptische Koeffizient von FLC. Dadurch können sehr wenige und/oder kurze Elektroden Elij eingesetzt werden, was deren Bandbreite vergrößert und beispielsweise eine Temperaturstabilisierung überflüssig machen kann.

Elektroden oder Elektrodenteile, auch im Fall anderer Elektrodenanordnungen als in den Figuren 1 bis 3, können auch auf dem Substrat SUB angebracht sein.
Ferner können zusätzliche Elektroden angebracht werden, welche eine anfängliche Polarisierung des Flüssigkristalls erleichtern. Um in X-Richtung verlaufendes elektrisches Feld zu erzeugen, sind in Figur 11 großflächige Elektroden PE1, PE2 auf den Außenseiten der Substrathälften SUB, CD vorgesehen oder das Bauelement ist auf eine oder zwischen zwei großflächige Elektroden aufzulegen. Auch die Belegung des Bodens des Wellenleiters mit einer durchgehenden Elektrode ist möglich. Um ein in Z-Richtung verlaufendes Feld zu erzeugen, werden Elektroden links und rechts neben dem Wellenleiter auf den Substratteilen SUB oder CD vorgesehen. Im Fall ihrer Unterbringung auf Substratteil SUB kann die anfängliche Polarisierung auch ohne aufgelegtes Substratteil CD erfolgen, so daß die dort befindlichen Elektroden den Z-Verlauf des Polarisierungsfeldes nicht stören können.
Eine aussichtsreiche Möglichkeit zur Polarisierung besteht darin, eine oder mehrere Wände des Wellenleiters chemisch, thermisch oder mechanisch zu behandeln oder zu beschichten. Weitere Gestaltungsfreiheiten ergeben sich durch den großen elektrooptischen Effekt in FLC. Die Elektrodenkämme können dadurch u.U. bis auf je eine Zinke abgemagert werden. Dadurch vergrößert sich die optische Bandbreite. Eine weitere Folge des hohen elektrooptischen Koeffizienten ist, daß nur Teile des Wellenleiters zur Polarisationstransformation benötigt werden, beispielsweise 10 bis 200 um alle 100 bis 2000 µm. Dadurch können andere, z.B. stärker doppelbrechende oder schwächer dämpfende Materialien für die zwischen Polarisationstransformatoren liegenden Wellenleiterteile verwendet werden. In Frage kommen fest oder flüssige Polymere, nematische Flüssigkristalle und ähnliche Materialien.

Bei Verwendung von Polymeren oder Silicium als Substrat können zur Verbindung der Erfindung mit Lichtwellenleitern aus Quarzglas V-Nuten eingeprägt bzw. anisotrop eingeätzt sein, welche eine aktive Justage erübrigen und so eine preisgünstige Herstellung ermöglichen. Die Technik zur Erzeugung von Wellenleitern auf Silizium oder in Quarzglas ist beispielsweise im Tagungsband der 24th European Conference of Optical Communication, Madrid, 20. bis 24. September 1998, Seiten 319 bis 328 und den dortigen Literaturstellen angeben.

In den Ausführungsbeispielen der Figuren 1 bis 3 ist der elektrooptische Koeffizient r51 gefordert, welcher durch vertikales elektrisches Feld die Polarisation verändern kann. Ebenso verwendbar wäre r52, welcher durch longitudinales elektrisches Feld verwendet wird. Durch Umorientierung von Kristallachsen kann man ggf. andere elektrooptische Koeffizienten verwenden, beispielsweise r42 oder r41 bei Y-Schnitt und X-Ausbreitungsrichtung, r43 oder r41 bei Z-Schnitt und X-Ausbreitungsrichtung, r53 oder r52 bei Z-Schnitt und Y-Ausbreitungsrichtung.

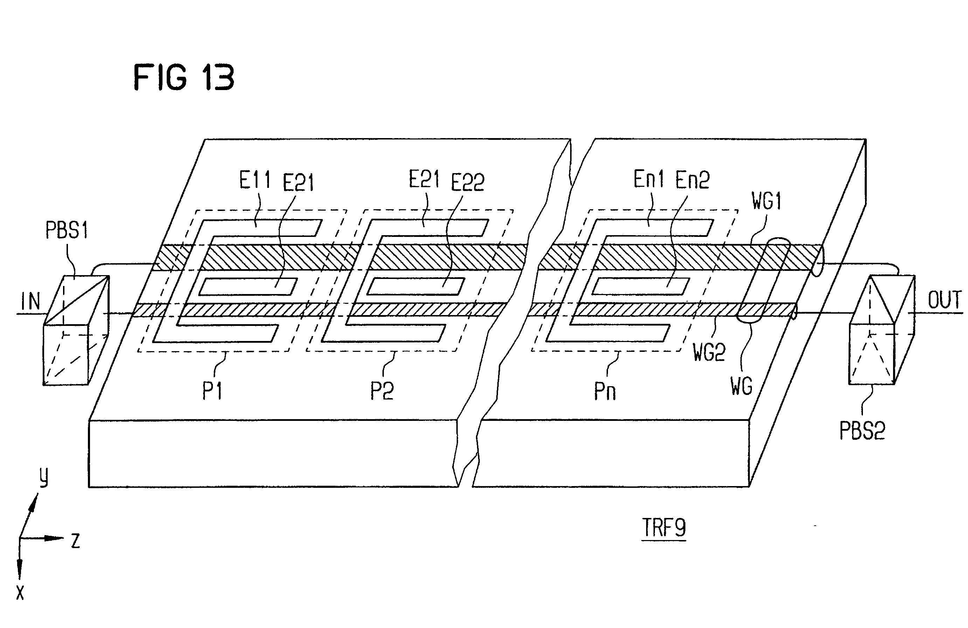

Bisher war im wesentlichen von doppelbrechenden Materialien zur PMD-Kompensation die Rede. Die Wellenleiterdoppelbrechung wird natürlich oft einfach durch Substratdoppelbrechung erreicht. Es reicht aus, wenn das Substratmaterial oder der Wellenleiter selbst doppelbrechend ist.
In einer Verallgemeinerung des Wirkungsprinzips eignet sich zur PMD-Kompensation oder -Emulation jede Anordnung, in welcher Modenwandlung zwischen zwei unterschiedliche Ausbreitungsgeschwindigkeiten aufweisenden Moden möglich ist, zur PMD-Kompensation. An die Stelle der Hauptpolarisationen (principal states-of-polarization) treten somit allgemein Hauptmoden. Es sind dies diejenigen Moden, welche die größtmögliche Gruppenlaufzeitdifferenz aufweisen. Bei longitudinal homogener Ausführung sind Hauptmoden (und Hauptpolarisationen) identisch mit den Eigenmoden.
Im Ausführungsbeispiel TRF9 der Figur 13 ist ein Lithiumniobatkristall mit X-Schnitt und Z-Ausbreitungsrichtung dargestellt. Auch andere Kristallschnitte oder Materialien sind möglich. Er weist einen zweimodigen Wellenleiter WG auf. Der Wellenleiter WG enthält seinerseits zwei Wellenleiter WG1, WG2. Sie sind unterschiedlich breit, so daß sie unterschiedliche Gruppenlaufzeiten aufweisen. Sie verlaufen in protonenausgetauschtem Material, so daß in WG1, WG2 jeweils nur eine Polarisation ausbreitungsfähig ist und somit WG nur zweimodig ist, nämlich seine beiden Hauptmoden führt. Über WG verteilt sind Modenwandler (P1, ...Pj, ...,Pn). Diese besitzen in diesem Kristallschnitt jeweils zwei im wesentlichen parallel zu den Wellenleitern WG1, WG2 verlaufende Elektroden E1j, E2j (j = 1...n). Sie erzeugen im Bereich von WG1, WG2 jeweils horizontale elektrische Felder, wodurch eine differentielle Phasenverschiebung zwischen den beiden Wellenleitermoden bewirkt wird. Durch Änderung der Steuerspannung zwischen den Elektroden E1j, E2j wird deshalb die Kopplung zwischen den beiden Wellenleitern verändert, so daß sich die Wellenleitermoden mehr oder weniger stark ineinander umwandeln lassen. Um PMD zu kompensieren, sind der Anordnung Polarisationsstrahlteiler PBS1, PBS2 vor- bzw. nachzuschalten.

## Patentansprüche

1. Verfahren zur Kompensation von Polarisationsmodendispersion (PMD), bei dem einer Anordnung mit einem Lichtwelleleiter (WG) mit zwei unterschiedliche Ausbreitungskonstanten aufweisenden Hauptmoden und mehreren zur Umwandlung der Hauptmoden des Wellenleiters ineinander dienenden elektrooptischen Modenwandlern (P1, ...Pj, ...,Pn; E11, E21,...) ein zu kompensierendes optisches Signal (OS) zugeführt wird und bei dem mehr als zwei elektrooptische Modenwandler (P1, ...Pj, ...,Pn, E11, E21,...) oder mehr als zwei Gruppen von Modenwandlern individuell mit mehr als zwei von mehr als zwei Parametern bestimmten Steuerspannungen derart angesteuert werden, daß die Polarisationsmodendispersion des optischen Signals (OS) kompensiert wird.

2. Verfahren nach Anspruch 1,
**dadurch gekennzeichnet,**
**daß** die beiden Hauptmoden orthogonale Hauptpolarisationen sind und der Wellenleiter (WG) doppelbrechend ist.

3. Verfahren nach Anspruch 1 oder 2,
**dadurch gekennzeichnet,**
**daß** bei einer Anordnung mit zusätzlichen differentiellen Phasenschiebern (EP1, ..., Epn) auch diese einzeln und/oder in Gruppen individuell derart angesteuert werden, daß die Polarisationsmodendispersion kompensiert wird und/oder die Betriebswellenlänge ausgewählt wird.

4. Verfahren nach einem der Ansprüche 1 bis 3,
**dadurch gekennzeichnet,**
**daß** in einer Empfangseinrichtung (RX) zur Kompensation mindestens eine als Regelkriterium verwendete Spannung (U1, U2) durch Filtern und Gleichrichtung des Basisbandsignals (BB) gewonnen wird.

5. Polarisationsmodendispersion (PMD)-Kompensator (TRF1 ... TRF8) mit einem Wellenleiter (WG) mit zwei unterschiedliche Ausbreitungskonstanten aufweisenden Hauptmoden, der von einem optischen Signal (OS) durchlaufen wird, mit mehreren zur Umwandlung der Hauptmoden des Wellenleiters ineinander dienenden elektrooptischen Modenwandlern (P1, ...Pj, ...,Pn; E11, E21,...), von denen mehr als zwei elektrooptische Modenwandler (P1, ...Pj, ...,Pn, E11, E21,...) oder mehr als zwei Gruppen von Modenwandlern zur Kompensation der Polarisationsmoden-dispersion ansteuerbar sind.

6. PMD-Kompensator (TRF1 ... TRF8) nach Anspruch 5
**dadurch gekennzeichnet,**
**daß** mindestens eine Modenwandler eine Modenwandler-Elektrode (Eij, EMCkij; k=1,2; i=1,2; j=1,2..n; M, EMC) enthält, die kammartig mit quer zum Wellenleiter (WG) verlaufenden Zinken ausgebildet ist.

7. PMD-Kompensator (TRF1 ... TRF5) nach Anspruch 5 oder 6,
**dadurch gekennzeichnet,**
**daß** jeweils Zellen (Pj) aus mindestens zwei Modenwandler-Elektroden (Eij; i = 1, 2; j = 1, 2, ..., n) gebildet sind.

8. PMD-Kompensator (TRF1 ... TRF4) nach einem der Ansprüche 6 bis 7,
**dadurch gekennzeichnet,**
**daß** zwischen aufeinanderfolgenden Modenwandler-Elektroden (E1j und E2j, bzw. E2j und E1 (j+1)) wechselnde Abstände vorgesehen sind.

9. PMD-Kompensator (TRF1 ... TRF5) nach einem der Ansprüche 6 bis 8,
**dadurch gekennzeichnet,**
**daß** jeweils die Zinken mindestens zweier Modenwandler-Elektroden (E12, E22, ...Eij; i = 1, 2; j = 1, 2, ..., n) einer Zelle (Pj) ineinandergreifen.

10. PMD-Kompensator (TRF1 ... TRF6) nach einem der Ansprüche 5 bis 9,
**dadurch gekennzeichnet,**
**daß** eine ebenfalls kammartig ausgebildete Masse-Elektrode (M) vorgesehen ist, wobei deren Zinken und die Zinken der Modenwandler-Elektroden (E12, E22, ...Eij; i = 1, 2; j = 1, 2, ..., n) ineinandergreifen.

11. PMD-Kompensator (TRF2) nach Anspruch 10,
**dadurch gekennzeichnet,**
**daß** jeweils in einer Zelle (PVj) aus zwei Modenwandler-Elektroden (Eij, i = 1, 2;j = 1, 2, ...,) zwischen zwei Zinken der Masse-Elektrode (M) zwei Zinken - je eine von jeder Modenwandler-Elektrode (E1j und E2j) - angeordnet sind.

12. PMD-Kompensator (TRF3) nach einem der Ansprüche 5 bis 11,
**dadurch gekennzeichnet,**
**daß** zwischen den Modenwandler-Elektroden (E1j, E2j) breitere Phasenschieber-Elektroden (Epj) angeordnet sind, die individuell oder in mehreren Gruppen gruppenindividuell ansteuerbar sind.

13. PMD-Kompensator (TRF1 ... TRF6) nach Anspruch 12,
**dadurch gekennzeichnet,**
**daß** eine Phasenschieber-Elektrode (EPj) jeweils einen Bereich zwischen den Modenwandler-Elektroden einer Zelle und einen Bereich zwischen zwei Zellen (P1, P2; ...) umfaßt.

14. PMD-Kompensator (TRF8) nach einem der Ansprüche 5 bis 13,
**dadurch gekennzeichnet,**
**daß** er mindestens einen optischen Verstärker (OVj; j=1...n) aufweist.

15. PMD-Kompensator (TRF1 ... TRF6) nach einem der Ansprüche 5 bis 14,
**dadurch gekennzeichnet,**
**daß** ein dichroitisches Element (OVj; j=1...n) vorgesehen ist, welches eine regelbare Differenz der Verstärkungen oder Dämpfungen zweier othogonaler Polarisationen aufweist.

16. PMD-Kompensator (TRF1 ... TRF6) nach Anspruch 15,
**dadurch gekennzeichnet,**
**daß** durch die Regelung einer Differenz der Verstärkungen oder Dämpfungen zweier orthogonaler Polarisationen polarisationsabhängige Dämpfung oder Verstärkung eines optischen Mediums ausgleichbar ist.

17. PMD-Kompensator (TRF1 ... TRF6) nach einem der Ansprüche 5 bis 16,
**dadurch gekennzeichnet,**
**daß** er als Chip oder auf einem Substrat (SUB) aus Lithiumniobat, Lithiumtantalat, III/V-Halbleitern, Silicium, Siliciumdioxid oder Polymer realisiert ist.

18. PMD-Kompensator (TRF1 ... TRF6) nach Anspruch 17,
**dadurch gekennzeichnet,**
**daß** der Wellenleiter (WG) ein Polymer oder einen Flüssigkristall enthält.

19. PMD-Kompensator (TRF4) nach einem der Ansprüche 5 bis 18,
**dadurch gekennzeichnet,**
**daß** der Wellenleiter (WG) mindestens einmal durch Reflexion gefaltet ist.

20. PMD-Kompensator (TRF1 ... TRF6) nach einem der Ansprüche 5 bis 19,
**dadurch gekennzeichnet,**
**daß** er in einer Empfangseinrichtung (RX) angeordnet ist und daß mindestens eine als Regelkriterium verwendete Spannung (U1, U2) durch Filtern und Gleichrichtung des Basisbandsignals (BB) gewonnen wird.

21. PMD-Kompensator (TRF1 ... TRF6) nach einem der Ansprüche 5 bis 20,
**dadurch gekennzeichnet,**
**daß** er als extern einstellbarer Emulator (EMU) ausgebildet ist.

22. PMD-Kompensator (TRF1 ... TRF8) nach einem der Ansprüche 5 bis 21,
**dadurch gekennzeichnet,**
**daß** die beiden Hauptmoden orthogonale Hauptpolarisationen sind und der Wellenleiter (WG) doppelbrechend ist.

## Claims

1. Method for compensation for polarization mode dispersion (PMD), in which an arrangement with an optical waveguide (WG) with main modes which have two different propagation constants and with a number of electrooptical mode converters (P1, ...Pj, ...,Pn; E11, E21,...) which are used for converting the main modes in the waveguide to one another, is supplied with an optical signal (OS) which is to be compensated, and more than two electrooptical mode converters (P1, ...Pj, ...,Pn, E11, E21,...) or more than two groups of mode converters are driven individually by more than two control voltages, which are determined by more than two parameters, such that the polarization mode dispersion of the optical signal (OS) is compensated for.

2. Method according to Claim 1,
**characterized**
**in that** the two main modes are orthogonal main polarizations, and the waveguide (WG) is birefringent.

3. Method according to Claim 1 or 2,
**characterized**
**in that**, in an arrangement with additional differential phase shifters (EP1, ..., Epn) the latter are also driven individually and/or individually in groups such that the polarization mode dispersion is compensated for and/or the operating wavelength is selected.

4. Method according to one of Claims 1 to 3,
**characterized**
**in that** at least one voltage (U1, U2), which is used as a control criterion, is obtained for compensation, by means of filters and rectification of the baseband signal (BB), in a receiving device (RX).

5. Polarization mode dispersion (PMD) compensator (TRF1 ... TRF8) having a waveguide (WG) with two main modes which have different propagation constants, through which compensator (TRF1 ... TRF8) an optical signal (OS) is passed, having a number of electrooptical mode converters (P1, ...Pj, ...,Pn; E11, E21,...) which are used to convert the main modes of the waveguide to one another, and of which more than two electrooptical mode converters (P1, ...Pj, ...,Pn; E11, E21,...) or more than two groups of mode converters can be driven to compensate for the polarization mode dispersion.

6. PMD compensator (TRF1 ... TRF8) according to Claim 5,
**characterized**
**in that** at least one mode converter contains a mode converter electrode (Eij, EMCkij; k=1,2; i=1,2; j=1,2..n; M, EMC), which is formed like a comb with tines running transversely with respect to the waveguide (WG).

7. PMD compensator (TRF1 ... TRF5) according to Claim 5 or 6,
**characterized**
**in that** cells (Pj) are in each case formed from at least two mode converter electrodes (Eij; i = 1, 2; j = 1, 2, ..., n).

8. PMD compensator (TRF1 ... TRF4) according to one of Claims 6 or 7,
**characterized**
**in that** alternating distances are provided between successive mode converter electrodes (E1j and E2j, or E2j and E1 (j+1)).

9. PMD compensator (TRF1 ... TRF5) according to one of Claims 6 to 8,
**characterized**
**in that** the tines of at least two mode converter electrodes (E12, E22, ...Eij; i = 1, 2; j = 1, 2, ..., n) of one cell (Pj) in each case engage in one another.

10. PMD compensator (TRF1 ... TRF6) according to one of Claims 5 to 9,
**characterized**
**in that** an earth electrode (M), which is likewise in the form of a comb, is provided, with its tines and the tines of the mode converter electrodes (E12, E22, ...Eij; i = 1, 2; j = 1, 2, ..., n) engaging in one another.

11. PMD compensator (TRF2) according to Claim 10,
**characterized**
**in that** two tines - in each case one of each mode converter electrode (E1j and E2j) - are in each case arranged in one cell (PVj) comprising two mode converter electrodes (Eij, i = 1, 2; j = 1, 2, ...,), between two tines of the earth electrode (M).

12. PMD compensator (TRF3) according to one of Claims 5 to 11,
**characterized**
**in that** broader phase shifter electrodes (Epj) are arranged between the mode converter electrodes (E1j, E2j) and can be driven individually, or a number of groups-can be driven individually.

13. PMD compensator (TRF1 ... TRF6) according to Claim 12,
**characterized**
**in that** one phase shifter electrode (Epj) in each case has an area between the mode converter electrodes of one cell and an area between two cells (P1, P2; ...).

14. PMD compensator (TRF8) according to one of Claims 5 to 13,
**characterized**
**in that** the PMD compensator (TRF8) has at least one optical amplifier (OVj; j=1...n).

15. PMD compensator (TRF1 ... TRF6) according to one of Claims 5 to 14,
**characterized**
**in that** a dichroitic element (OVj; j=1...n) is provided, which has a controllable difference between the gains or attenuations of two orthogonal polarizations.

16. PMD compensator (TRF1 ... TRF6) according to Claim 15,
**characterized**
**in that** any polarization-dependent attenuation or amplification in an optical medium can be compensated for by controlling any difference between the gains or attenuations of two orthogonal polarizations.

17. PMD compensator (TRF1 ... TRF6) according to one of Claims 5 to 16,
**characterized**
**in that** the PMD compensator (TRF1 ... TRF6) is in the form of a chip or is produced on a substrate (SUB) composed of lithium niobate, lithium tantalate, III/V semiconductors, silicon, silicon dioxide or polymer.

18. PMD compensator (TRF1 ... TRF6) according to Claim 17,
**characterized**
**in that** the waveguide (WG) contains a polymer or a liquid crystal.

19. PMD compensator (TRF4) according to one of Claims 5 to 18,
**characterized**
**in that** the waveguide (WG) is folded at least once by reflection.

20. PMD compensator (TRF1 ... TRF6) according to one of Claims 5 to 19,
**characterized**
**in that** the PMD compensator (TRF1 ... TRF6) is arranged in a receiving device (RX), and in that at least one voltage (U1, U2), which is used as a control criterion, is obtained by the filtering and rectification of the baseband signal (BB)

21. PMD compensator (TRF1 ... TRF6) according to one of Claims 5 to 20,
**characterized**
**in that** the PMD compensator (TRF1 ... TRF6) is in the form of an externally adjustable emulator (EMU).

22. PMD compensator (TRF1 ... TRF8) according to one of Claims 5 to 21,
**characterized**
**in that** the two main modes are orthogonal main polarizations, and the waveguide (WG) is birefringent.

## Revendications

1. Procédé de compensation de dispersion modale de polarisation (PMD) dans lequel un signal optique (OS) à compenser est amené à un montage comprenant un guide d'ondes optiques (WG) avec deux modes principaux présentant des constantes de propagation différentes et plusieurs convertisseurs de modes électrooptiques (P1, ... Pj, ..., Pn; E11, E21, ...) servant à convertir l'un dans l'autre les modes principaux du guide d'ondes et plus de deux convertisseurs de modes électrooptiques (P1, ... Pj, ..., Pn, E11, E21, ...) ou plus de deux groupes de convertisseurs de modes sont commandés individuellement par plus de deux tensions de commande définies par plus de deux paramètres de manière que la dispersion modale de polarisation du signal optique (OS) se trouve compensée.

2. Procédé selon la revendication 1, **caractérisé en ce que** les deux modes principaux sont des polarisations principales orthogonales et **en ce que** le guide d'ondes (WG) est biréfringent.

3. Procédé selon la revendication 1 ou 2, **caractérisé en ce que**, étant donné un montage comprenant des déphaseurs différentiels additionnels (EP1, ..., Epn), ceux-ci se trouvent aussi commandés individuellement, séparément et/ou en groupes, de manière que la dispersion modale de polarisation se trouve compensée et/ou la longueur d'onde de service se trouve sélectionnée.

4. Procédé selon l'une des revendications 1 à 3, **caractérisé en ce qu'**au moins une tension (U1, U2), utilisée comme critère de réglage, est obtenue par filtrage et redressement du signal de bande de base (BB) dans un dispositif récepteur (RX), aux fins de la compensation.

5. Compensateur de dispersion modale de polarisation (PMD) (TRF1 ... TRF8) comprenant un guide d'ondes (WG) avec deux modes principaux présentant des constantes de propagation différentes, lequel est traversé par un signal optique (OS), et avec plusieurs convertisseurs de modes électrooptiques (P1, ... Pj, ..., Pn; E11, E21, ...) servant à convertir l'un dans l'autre les modes principaux du guide d'ondes, plus de deux desdits convertisseurs de modes électrooptiques (P1, ... Pj, ..., Pn, E11, E21, ...) ou plus de deux groupes de convertisseurs de modes pouvant être commandés aux fins de la compensation de la dispersion modale de polarisation.

6. Compensateur PMD (TRF1 ... TRF8) selon la revendication 5, **caractérisé en ce qu'**au moins un convertisseur de modes contient une électrode de convertisseur de modes (Eij, EMCkij; k = 1, 2; i = 1, 2; j = 1, 2 ... n; M, EMC), laquelle est réalisée en forme de peigne et dont les pointes sont placées transversalement par rapport au guide d'ondes (WG).

7. Compensateur PMD (TRF1 ... TRF5) selon la revendication 5 ou 6, **caractérisé en ce que** dans chaque cas sont réalisées des cellules (Pj) formées par au moins deux électrodes de convertisseur de modes (Eij; i = 1, 2; j = 1, 2, ..., n).

8. Compensateur PMD (TRF1 ... TRF4) selon l'une des revendications 6 à 7, **caractérisé en ce qu'**entre des électrodes de convertisseur de modes (E1j et E2j resp. E2j et E1 (j+1)) successives sont prévus des espacements changeants.

9. Compensateur PMD (TRF1 ... TRF5) selon l'une des revendications 6 à 8, **caractérisé en ce que** les pointes d'au moins deux électrodes de convertisseur de modes (E12, E22, ... Eij; i = 1, 2; j = 1, 2 ... n) d'une cellule (Pj) s'engrènent.

10. Compensateur PMD (TRF1 ... TRF6) selon l'une des revendications 5 à 9, **caractérisé en ce qu'**est prévue une électrode de masse (M), également réalisée en forme de peigne, les pointes de celle-ci et celles des électrodes de convertisseur de modes (E12, E22, ... Eij; i = 1, 2; j = 1, 2 ... n) s'engrenant.

11. Compensateur PMD (TRF2) selon la revendication 10, **caractérisé en ce que**, dans chaque cellule (PVj) composée de deux électrodes de convertisseur de modes (Eij; i = 1, 2; j = 1, 2 ...), deux pointes - une de chaque électrode de convertisseur de modes (E1j et E2j) - sont placées entre deux pointes de l'électrode de masse (M).

12. Compensateur PMD (TRF3) selon l'une des revendications 5 à 11, **caractérisé en ce qu'**entre les électrodes de convertisseur de modes (E1j, E2j) sont placées des électrodes de déphasage (Epj) plus larges, lesquelles peuvent être commandées individuellement ou en plusieurs groupes, chaque groupe étant commandé individuellement.

13. Compensateur PMD (TRF1 ... TRF6) selon la revendication 12, **caractérisé en ce que** chaque électrode de déphasage (Epj) couvre à chaque fois une plage comprise entre les électrodes de convertisseur de modes d'une cellule et une plage comprise entre deux cellules (P1, P2; ...).

14. Compensateur PMD (TRF8) selon l'une des revendications 5 à 13, **caractérisé en ce qu'**il présente au moins un amplificateur optique (OVj; j = 1 ... n).

15. Compensateur PMD (TRF1 ... TRF6) selon l'une des revendications 5 à 14, **caractérisé en ce qu'**est prévu un élément dichroïque (OVj; j = 1 ... n) présentant une différence réglable des amplifications ou des affaiblissements de deux polarisations orthogonales.

16. Compensateur PMD (TRF1 ... TRF6) selon la revendication 15, **caractérisé en ce que** le réglage d'une différence entre les amplifications ou les affaiblissements de deux polarisations orthogonales permet de compenser l'affaiblissement ou l'amplification d'un milieu optique, ledit affaiblissement ou ladite amplification dépendant de la polarisation.

17. Compensateur PMD (TRF1 ... TRF6) selon l'une des revendications 5 à 16, **caractérisé en ce qu'**il est réalisé sous la forme d'une puce ou sur un substrat (SUB) de niobate de lithium, de tantalate de lithium, de semiconducteurs III/V, de silicium, de dioxyde de silicium ou sur un substrat polymère.

18. Compensateur PMD (TRF1 ... TRF6) selon la revendication 17, **caractérisé en ce que** le guide d'ondes (WG) contient un polymère ou un cristal liquide.

19. Compensateur PMD (TRF4) selon l'une des revendications 5 à 18, **caractérisé en ce que** le guide d'ondes (WG) est plié au moins une fois par réflexion.

20. Compensateur PMD (TRF1 ... TRF6) selon l'une des revendications 5 à 19, **caractérisé en ce qu'**il est placé dans un dispositif récepteur (RX) et **en ce qu'**au moins une tension (U1, U2), utilisée comme critère de réglage, est obtenue par filtrage et redressement du signal de bande de base (BB).

21. Compensateur PMD (TRF1 ... TRF6) selon l'une des revendications 5 à 20, **caractérisé en ce qu'**il est réalisé comme émulateur (EMU) pouvant être réglé de l'extérieur.

22. Compensateur PMD (TRF1 ... TRF8) selon l'une des revendications 5 à 21, **caractérisé en ce que** les deux modes principaux sont des polarisations principales orthogonales et **en ce que** le guide d'ondes (WG) est biréfringent.
